# EUROPEAN PATENT APPLICATION

(11) **EP 0 645 575 A1**
(43) Date of publication of application: **29.03.1995**
(21) Application number: 94306830.4
(22) Date of filing: 19.09.1994
(51) Int. Cl.: F16L 41/08

(54) **Pipe fitting**

(30) Priority: 21.09.1993 GB 9319464
(71) Applicant: WASK-RMF LIMITED, Keighley, West Yorkshire BD21 5NA (GB)
(72) Inventor: Redman, Gordon Peter, Cullingworth West Yorkshire (GB); Smith, Trevor Reginald, Ilkley West Yorkshire (GB)
(74) Representative: Allman, Peter John

(57) **Abstract**

A pipe fitting for installation in a pre-drilled hole (9) in a pipe (2) comprises a tubular body (13) which has an outwardly flared bottom end (14). A radially outwardly extending annular flange (15) is provided at the widest edge of the flared end (14). A deformable tubular collar (16), formed preferably from a plastics material such as polyethylene, is disposed around a central cylindrical portion of the tubular body (13) and is slidable with respect thereto. The collar (16) defines an outwardly extending flange (17) at its end nearest the flared end (14) of the tubular member (13). The collar (16) and the flared end (14) of the tubular member (13) are dimensioned such that the collar (16) is radially expanded when it is slid onto the flared end (14) and assumes a diameter which is a close fit in the hole (9) in the pipe (2). For installation, the fitting is first pushed through the hole (9) so that the flared end (14) of the tubular member (13) and a substantial portion of the collar (16) are received within the pipe (2). The collar (16) is then forced over the flared end of the tubular member (13) to expand it. The fitting is then pulled up through the hole (2) until the collar flange (17) is pressed tightly against the inner wall of the pipe (2) by the flange (15). This forms a good pressure seal between the pipe (2) and the fitting on the internal surface of the pipe (2). The fitting is particular suited for use with internally lined pipes in which it is essential that the seal covers the cut edge of the lining around the rim of the hole.

## Description

This invention relates to a pipe fitting for installation into a pre-drilled hole in a wall of a fluid container. Particularly, but not exclusively, the invention relates to a pipe fitting intended for use with lined containers, for instance lined pipes. The invention also provides a method and apparatus for the installation of the pipe fitting.

A requirement often arises in pipeline networks to provide a service line connection to a main pipe, or to replace a faulty fitting already in place. In both cases the fitting is inserted into a hole drilled in the pipe wall and some form of sealing means must be employed to ensure a tight seal between the pipe fitting and the pipe. For example, the hole in the pipe wall could simply be tapped and the fitting screwed into the pipe, or alternatively some form of sealing gasket could be located between the fitting and the rim of the hole.

Such an arrangement is described in British Patent No. 956,591 which discloses a branch pipe fitting which is screwed into a tapped hole in a pipe wall. Sealing is provided by a resilient sealing gasket which fits around the branch pipe where it emerges from the main pipe, and bears against the external surface of the main pipe around the edge of the hole. A pressure collar and locking nut are provided to compress the sealing gasket around the connection of the main pipe and branch pipe to create a good gas tight seal.

British Patent No. 1574038 describes a tubular pipe fitting which is inserted into an unthreaded hole drilled in a pipe wall. An elastomeric deformable packing sleeve is positioned between the rim of the hole in the pipe wall and the tubular fitting. The end of the sleeve which extends from the external surface of the pipe wall has a radially extending annular flange. Means are provided to deform the sleeve in the region of the flange to provide a tight seal between the rim of the hole and the tubular fitting.

British Patent Application No. 2051991A discloses an alternative arrangement for sealing a tubular pipe fitting within an unthreaded hole in a pipe wall. In this arrangement a flexible sleeve member is disposed between the rim of the hole and the pipe fitting, the sleeve being initially a loose fit within the hole. The pipe fitting has a flared end which is then drawn up into the sleeve causing it to expand and form a tight seal with the wall of the hole in the pipe.

Each of the above three described arrangements works satisfactorily when used in conjunction with pipes which do not have an interior lining. However, it has become common practice to provide conduits with linings, such linings generally being installed to remedy deficiencies in existing conduits, for example leaking joints, broken pipes, corrosion holes and the like. The linings may be thin, merely providing a leakage barrier, or relatively thick so as to provide some structural strength. In some cases, the lining is a pipe in its own right which is expanded against the walls of the original conduit. Some of the linings are fibre reinforced, i.e. hose types, whereas others are thermoplastic or thermoset resin based. Some of the linings adhere to the internal wall of the original conduit, whereas others have no adhesion at all. In addition, linings are sometimes installed in pipework to meet anti-corrosion requirements.

Linings can provide problems when a new fitting is to be inserted into a pipe and a hole must be drilled through the pipe and the lining. There may be no adhesion to the pipe wall, or adhesion of the lining to the pipe wall may not be uniform along the whole length of the pipe. In some places pockets or annular regions may have developed between the lining and the pipe wall. If the lining is separated from the pipe wall at the point of drilling the hole there is the problem of having to take up the lining when the fitting is inserted such that it is sealed against the pipe wall. Similarly, the actual process of drilling the hole in the pipe wall may well leave the lining with a torn edge which is detached from the wall of the pipe in the region of the hole. If the lining is not resealed against the pipe wall, fluid in the pipe can propagate along an annulus between the lining and the pipe wall, having potentially catastrophic consequences, particularly in the case of gas pipes. Any such annulus must be sealed to prevent a build up of fluid between the lining and the internal wall of the pipe. Effective sealing will also cure the problem of "wicking" whereby fluid is able to pass through fibres of the lining by virtue of the fact that the polymer resin may not be homogeneous throughout the woven fibres. The above described arrangements are not suited for use in conjunction with such lined pipes as the sealing means are disposed either around the pipe fitting within the hole or substantially around the pipe fitting bearing against the external surface of the pipe. When installing fittings in lined pipes it is necessary to provide a seal that acts on the inside of the pipe wall and overlaps the cut edge of the pipe lining to prevent fluid getting between the lining and the inner pipe wall.

There have been various suggested pipe fittings and sealing means for use in conjunction with lined pipes. For example, UK Patent Application No. 2 223 550A discloses a pipe fitting which comprises an outer screw threaded ferrule which locates into a tapped hole drilled in a pipe wall and an inner tubular member which extends into the pipe and has an annular flange at its end. A cup seal is located around the tubular member adjacent the annular flange and is filled with a plumbing sealant. The arrangement is such that when the tubular member is drawn up through the ferrule subsequent to its location in the pipe, the cup seal is compressed against the inner wall of the pipe and spreads out around the edge of the hole covering the cut edge of the lining. This, in conjunction with the plumbing sealant forms a tight seal which both prevents fluid escaping from the hole in the pipe and from getting in between the pipe lining and the inner pipe wall.

An alternative pipe fitting adapted for use with lined pipes is described in British Patent Application No. 9013795. This describes a pipe fitting which has an outer body which locates in a hole in a pipe. An inner body which is movable with respect to the outer body extends from the outer body into the interior of the pipe. The end of the inner body bears a deformable sealing collar which abuts against a radially outward extending flange at the very end of the inner body. The corresponding end of the outer body is tapered where it extends into the pipe interior. The arrangement is such that drawing up the inner body through the outer body and the pipe hole pulls the seal over the tapered end of the outer body thereby causing it to expand and deform. The seal is then compressed between the flange on the inner member and the inner wall of the pipe to form a good gas tight seal which covers the cut edge of the pipe lining.

European Patent Application No. 0339156 describes an arrangement in which a pipe fitting which is to be inserted into a hole in a pipe has a tapered end portion formed from a circular array of elongate projections. The ends of the projections are bent radially outwards and provide a seating for a elastomeric O-ring. A central member is pushed through the tubular fitting, subsequent to its insertion into the pipe hole, to radially expand the projections which in turn expand the O-ring to a diameter great enough to surround the edge of the hole in the pipe. The fitting is then partially drawn up through the hole so that the O-ring is compressed against the inner wall of the pipe and spreads out covering the edge of a cut pipe lining forming a seal.

Each of the above three discussed structures has the disadvantage that an elastomeric sealing member is exposed to the contents of the pipe. Thus these arrangements are not suitable for applications in which the pipe is to carry a fluid which perishes the elastomer, for example gas. The arrangement disclosed in European Patent Application No. 0339156 has an added disadvantage in that the projections do not apply pressure to the O-ring at all points around the hole in the pipe and therefore it is difficult to obtain a uniform and effective seal.

It is an object of the present invention to provide a pipe fitting which obviates or mitigates the above disadvantages. It is a further object of the present invention to provide a method and apparatus for installing a fitting in a pipe under pressure.

According to a first aspect of the present invention there is provided a pipe fitting for installation in an aperture defined by a wall, the pipe fitting comprising a substantially tubular body defining an outwardly flared end portion insertable through the aperture, and a deformable collar slidably disposed around the tubular member, the flared end portion and the collar being dimensioned so that the collar may be outwardly expanded by sliding it onto the flared end portion, the collar in its unexpanded state being insertable through the aperture and in its expanded state having a maximum diameter greater than the diameter of the aperture.

The collar may for instance be in the form of a simple ring.

Preferably the collar comprises a generally tubular section which supports an outwardly extending flange at an end thereof adjacent the flared end portion of the tubular member.

Preferably when the collar is in its free state it defines a tapered body section which narrows towards the flanged end.

Preferably the angle of taper and the length of the flared end of the tubular body are substantially the same as the angle of taper and the length of the body section of the collar such that when the collar is expanded on the flared end the outside diameter of the body section is substantially constant along the length of the body.

Preferably the tubular body defines a radially outwardly extending annular flange at the widest portion of the flared end. The flange helps prevent the collar from being pushed off the flared end of the tubular body.

Preferably the collar is formed from a plastics material, for example polyethylene.

An elastomeric annular sealing member may be disposed around the collar adjacent to its flange. For example, the sealing member may be in the form of an "O" ring.

In a preferred embodiment the tubular body defines an aperture in its wall near to its end remote from its flared end. The aperture allows, for instance, the inter-connection of a further fitting to the pipe fitting, for example a branch pipe.

The end of the tubular body remote from the flared end may be sealed by a plug in screw threaded engagement with an internal surface of the tubular body.

Preferably the plug is moveable between a first position in which it seals the said aperture and the end of the tubular body and a second position in which the said aperture is in fluid communication with the aperture in the wall.

Preferably the pipe fitting further comprises means for forcing the collar onto the flared end of the tubular body. Such means may comprise a nut in screw threaded engagement with the tubular body between the collar and the end of the tubular body remote from the flared end. In such an arrangement screwing the nut along the tubular body towards the flared end will force the collar along the tubular body and onto the flared end.

Preferably a tubular sleeve is disposed around the tubular body between the collar and the nut and is moveable with respect to the tubular body. The sleeve may define an annular flange at its end adjacent the nut.

Preferably means are provided for supporting the tubular body within the aperture defined in the wall with the collar bearing against an inner surface of the wall around the periphery of the aperture.

Preferably the means for supporting the tubular body comprises a substantially cup shaped member defining an annular rim intended to abut against an outer surface of the wall around said aperture.

Preferably the supporting member and the sleeve are slidable relative to each other.

A lock nut, in screw threaded engagement with the tubular sleeve, may be disposed between the supporting means and the end of the sleeve remote from the collar. With the pipe fitting installed within the aperture the lock nut can be screwed along the sleeve to bear against the supporting means thereby preventing the sleeve from moving through the supporting means in the direction of the aperture.

Preferably a deformable washer is slidably disposed around the tubular member between the collar and the outwardly extending annular flange of the tubular body, the deformable washer being slidable along the tubular body onto the flared end portion as the collar is slid onto the flared end portion, and the deformable washer being dimensioned such that it is outwardly expanded as it is slid onto the flared end portion to a maximum diameter greater than the maximum diameter of the annular flange of the tubular body.

Preferably the deformable washer is circumferentially corrugated when in its unexpanded state and is substantially planar when in its expanded state.

Alternatively, the washer may be split so as to define two circumferential ends, the two ends overlapping when the washer is in its unexpanded state.

According to a second aspect of the present invention there is provided apparatus for installing a pipe fitting as defined above in an aperture in a container wall, comprising means for pushing said fitting through the aperture with the collar supported on the central portion of the tubular body such that the flared end of the tubular body and at least a portion of the collar are received within the interior of the container, means for forcing the collar onto the flared end of the tubular body to expand the collar, and means for partially drawing the fitting back through the aperture such that at least a portion of the collar is pressed against the inner wall of the container around the aperture.

Thus a good seal is formed between the pipe fitting and the container as the collar flange is pressed against the internal wall of container around the aperture.

Since the collar flange forms a seal with the internal wall of the container around the aperture, the pipe fitting and installation apparatus are suitable for use in connection with containers which have an internal lining, the said aperture extending through the lining, as well as in connection with containers which have no such lining.

In a preferred embodiment of the invention in which the flared end of the tubular body defines an outwardly extending flange, a particular good seal is obtained as the collar flange is compressed between the flange on the tubular end and the internal wall of the container.

In a preferred embodiment of the invention in which the collar is formed from a plastics material, the fitting has an advantage over known fittings incorporating elastomeric sealing means, in that the collar which forms the seal will not perish in fluids such as household gas. The fitting according to the present invention is therefore suited to a wide range of applications, for instance the fitting is suitable for installation in lined gas pipes.

Preferably where the pipe fitting includes a collar which comprises a body section which supports an outwardly extending flange at an end thereof adjacent the flared end portion of the tubular member, said means for partially drawing the fitting back through the aperture draws the fitting back through the aperture such that a portion of the body section of the collar is received within the aperture and the collar flange is pressed against the inner wall of the container.

Preferably the apparatus further comprises a housing mounted on the container around the location of the hole. The housing may be a multi-component assembly of known type widely used to house and support various forms of operating machinery. For instance, the same housing may be used to support drilling machinery used to pre-drill the aperture in the container.

Preferably the means for pushing the pipe fitting through the aperture comprises a first elongate member supported by the housing so that its longitudinal axis extends substantially perpendicularly to the container wall concentric with the aperture, the first elongate member being moveable along its longitudinal axis. The elongate member may comprise a solid spindle of circular cross-section, or an array of concentric hollow spindles.

Preferably the first elongate member defines a screw threaded spigot extending axially from one end thereof, said spigot being adapted to be received in an internally screw threaded socket defined by the pipe fitting. The socket may be formed within the end of the tubular body remote from the flared end.

Preferably the means for forcing the collar onto the flared end of the tubular body comprises a drive member which acts upon the end of the collar remote from the flared end, and means for urging said drive member and the flared end together in a direction parallel to the axis of the tubular body and collar.

Preferably the drive member comprises a tubular sleeve disposed around the tubular body of the pipe fitting.

Preferably the means for urging the drive member and the flared end axially together comprises a first hollow generally cylindrical member supported within the housing and disposed coaxially with the axis of said first elongate member and the tubular body and in abutment with the drive member, and means to prevent axial movement of the drive member whilst the tubular body is moved along its axis by means of the first elongate member.

Preferably the means to prevent axial movement of the drive member comprises a second hollow elongate member supported within the housing and coaxially disposed around the first elongate member and in abutment with the said first cylindrical member, and means for preventing axial movement of the hollow elongate member relative to the housing.

The first cylindrical member and the second hollow elongate member may be defined by two portions of a single member.

Preferably a portion of the external surface of the first elongate member is screw threaded, and a first nut is in screw threaded engagement with said portion and bears against the top edge of the second hollow elongate member, whereby rotation of said first nut causes relative axial movement between the first elongate member and the second hollow elongate member.

Preferably the means for partially drawing said fitting up through the aperture comprises a third hollow elongate member supported by the housing and disposed coaxially around the second hollow elongate member, a second hollow cylindrical member disposed around the tubular body, the drive member and the aperture, one end of said second cylindrical member bearing, directly or indirectly, against the container wall and the other end being fixed to the third hollow elongate member, and a second nut in screw threaded engagement with the second hollow elongate member and abutting the end of the third hollow elongate member remote from the second cylindrical member, whereby rotation of said second nut with respect to both hollow elongate members causes the second hollow elongate member to move axially up through the third hollow elongate member.

According to a third aspect of the present invention there is provided a method of installing a pipe fitting as defined above in a pre-drilled aperture in a container, comprising pushing the pipe fitting through the aperture so that the flared end of the tubular body and at least a portion of the collar are received within the container, forcing the collar onto the flared end of the tubular body so that the collar is expanded, and drawing the fitting back up through the aperture so that at least a portion of the collar is pressed against the internal wall of the container.

Preferably, where the pipe fitting includes a collar which comprises a body section which supports an outwardly extending flange at an end thereof adjacent the flared end portion of the tubular member, the fitting is drawn back up through the aperture so that a portion of the body section of the collar is received within the aperture and the collar flange is pressed against the internal wall of the container.

Preferably the step of forcing the collar onto the flared end of the tubular body comprises holding the collar in a fixed position relative to the container and drawing the tubular body up through the collar so that the flared end is received within the collar.

Preferably on completion of the step of pushing the fitting through the aperture, the end of the collar remote from the flange remains within the hole in abutment with the rim of the hole.

A specific embodiment of the invention will now be described, by way of example, with reference to the accompanying drawings in which;
Figure 1 shows a pipe fitting and apparatus for installing the pipe fitting according to the present invention, arranged on a pipe;
Figures 2 to 6 illustrate the apparatus and pipe fitting of Figure 1 in three further stages of the installation process;
Figure 7 illustrates the pipe fitting of Figure 1 in position fitted to a pipe after removal of the installation apparatus;
Figures 8 and 9 show a modification of the apparatus illustrated in Figures 1 to 7; and
Figure 10 illustrates a washer which comprises part of the modified apparatus of Figures 8 and 9.

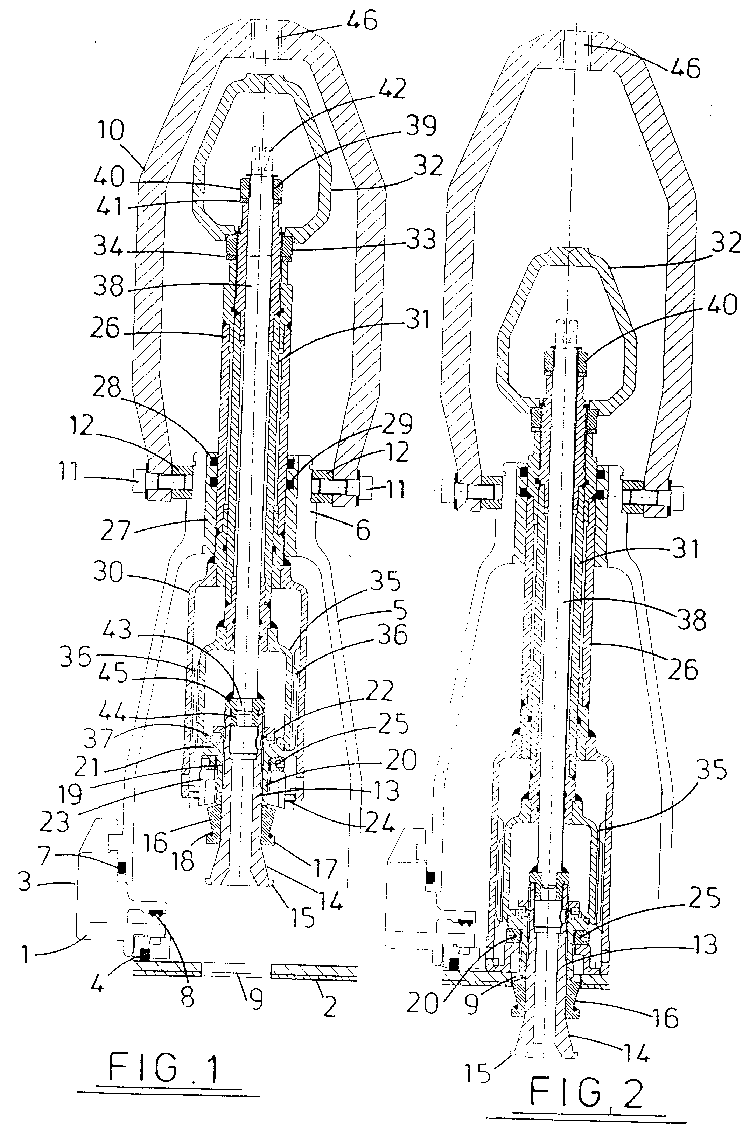

Referring to Figure 1, the apparatus for installing the pipe fitting comprises a known multi-component outer assembly which may be adapted to house a variety of known operating machinery, and an inner installation apparatus in accordance with the present invention.

The known outer assembly comprises a machine undercarriage 1 which is sealed to the external wall of an internally lined pipe 2. The undercarriage 1 supports a machine base 3 which is designed to receive a variety of machine assemblies. The assembly may be mounted to the pipe wall 2 using a known chain arrangement (not shown), and sealed thereto by means of a seal 4. The machine base supports a canopy 5 which is substantially frustoconical in shape and defines a cylindrical neck portion 6 at its narrow end. The canopy 5 is sealed at its wider end to the machine base 3 by a seal 7. The assembly is adapted to receive a slidable valve plate (not shown) between the machine base 3 and the undercarriage 1, which may be sealed on both faces by seals 8. The valve plate may be used to seal off a hole 9 in the pipe wall 2 to enable machine assemblies to be mounted within, or removed from, the outer assembly, without releasing the contents of the pipe 2. Thus the assembly is suitable for use with pipes which are in service, that is filled with a fluid such as a flammable gas that must be isolated from the atmosphere.

An outer bridal 10 in the form of a substantially U shaped stirrup is fixed at its open end to the neck 6 of the canopy 5 by means of bolts 11 and bushes 12. The above described known outer assembly may be used to house a variety of different types of operating machinery. In the illustration of Figure 1 the assembly is shown supporting pipe fitting installation machinery according to the present invention. It will be appreciated however, that the same assembly may previously have been used to house a drilling machine to pre-drill a hole in the pipe wall into which the pipe fitting is to be installed. There are many known methods for drilling such a hole in the wall of a lined pipe, for example that described in UK Patent Application No. 9013795, and therefore details of the pipe hole drilling operation will not be discussed here.

Referring again to Figure 1, a pipe fitting according to the present invention comprises an open ended cylindrical tubular member 13, one end of which is outwardly tapered defining a flared bottom end portion 14. The edge of the flared end portion 14 defines a radially outwardly extending annular flange 15. A polyethylene collar having a body portion 16 and a radially outwardly extending flange 17 defined at its bottom end, is disposed around a cylindrical central portion of the tubular member 13 adjacent the flared portion 14. In the configuration shown in Figure 1, that is with the collar 16 in substantially its free state configuration, the external surface of the collar body 16 is tapered towards the flange 17. The angle of taper of the collar body 16 is the same as that of the flared portion 14 of the tubular member 13 but in the opposite direction. In this configuration the flange 17 of the collar extends substantially perpendicular to the cylindrical portion of the tubular member 13 whereas the annular top end of the collar is inclined at an angle to the cylindrical portion approximately equal to 90 degrees minus the angle of taper of the collar 16 and flared portion 14. An elastomeric O-ring 18 is disposed around the collar body 16 at its narrow end adjacent the flange 17. The collar body 16 and/or flange 17 may be annularly recessed to provide a seating for the O-ring 18.

The tubular member 13 has an externally screw threaded portion 19 defined between the collar 16 and the upper end of the tubular member 13. In the configuration illustrated in Figure 1, a cylindrical sleeve 20 is disposed around the tubular member 13 in the region of the screw threaded portion 19 but is not itself screwthreaded, the sleeve 20 and the tubular member 13 being slidable with respect to each other. The sleeve 20 has an annular outwardly extending flange 21 at the top end thereof, and the bottom end of the sleeve 20 abuts against the top edge of the collar 16. A nut 22 is screwed onto the inner tubular member 13 and abuts the sleeve flange 21.

A generally cup shaped support member 23 is in loose engagement with the external surface of the sleeve 20. The bottom edge of the support member 23 defines a radially outwardly extending annular flange 24 which forms an annular abutment surface. Disposed between the support member 23 and the sleeve flange 21, and in screwthreaded engagement with the sleeve 20, is a nut 25.

Turning now to the inner installation apparatus adapted for installing the pipe fitting in the hole 9 in the pipe wall 2, this comprises a hollow tubular outer spindle 26 which extends through the neck 6 of the canopy 5. A bush 27 is disposed between the outer spindle 26 and the inner wall of the canopy neck 6. O-rings 28 and 29 are provided between the outer spindle 26 and the bush 27 as sealing means. The disposition of the outer spindle 26 is such that it extends perpendicular to the pipe wall 2 above, and concentric with, the hole 9.

The bottom end of the outer spindle 26 is welded to an axially disposed hollow and generally cylindrical member 30, hereinafter referred to as the shroud retainer 30. The shroud retainer 30 is closed at its upper end but open at its bottom end and has two diametrically opposed openings (not shown) which extend down to its bottom end and through which the pipe fitting can be accessed.

The internal diameter of the shroud retainer 30 is substantially the same as the external diameter of the flange 24 defined by the cup shape support member 23. The bottom internal rim of the shroud retainer 30 engages with the flange 24, for example by a ball and spring arrangement (not shown), to prevent the two rotating with respect to each other.

A hollow tubular intermediate spindle 31 is disposed coaxially within the hollow outer spindle 26. The intermediate spindle 31 is longer than the outer spindle 30 and extends therefrom at both ends. An intermediate bridle 32 in the form of a U shaped stirrup is removably fixed at its open end to the top end of the intermediate spindle 31. A nut 33 is in screwthreaded engagement with the intermediate spindle 31 between the intermediate bridle 32 and the upper end of the outer spindle 26, a washer 34 being disposed between the nut 33 and the top end of the outer spindle 26.

The bottom end of the intermediate spindle 31 extends into the shroud retainer 30 and is welded to a hollow generally cylindrical member 35, hereinafter referred to as the drive member 35. The drive member 35 has an open bottom end and is provided with two diametrically opposed openings (not shown), which extend down to its bottom end, through which the pipe fitting can be accessed.

The external diameter of the drive member 35 is less than the internal diameter of the shroud retainer 30 and the internal diameter of the drive member 35 is substantially equal to the diameter of the flange 21 of the sleeve 20. Both the external surface of the drive member 35 and the internal surface of the shroud retainer 30 are provided with axial splines 36 which interengage and prevent relative rotation between the drive member 25 and the shroud retainer 30. The drive member 35 has an internally extending annular flange 37 near to its open end which abuts against the upper surface of the sleeve flange 21 around the nut 22.

A solid inner spindle 38 is disposed coaxially within the intermediate spindle 31, and extends from both ends thereof. The inner spindle 38 has a screwthreaded portion 39 near its top end which bears a nut 40 and washer 41 such that the washer 41 abuts the top edge of the intermediate spindle 31. The very top end of the inner spindle 38 defines a square sectioned head 42. The bottom end of the inner spindle 38 extends into the drive member 35 and defines a relatively small diameter axial spigot 43 which is welded into a bore of a generally cylindrical adaptor 44.

The adaptor 44 defines an end flange 45 where it abuts the end of the inner spindle 38 around the base of the spigot 43. The external surface of the adapter 44 is in screwthreaded engagement with the inner surface of the open upper end of the tubular member 13 of the pipe fitting.

In use the installation apparatus with pipe fitting attached thereto are mounted within the outer housing assembly and located on a pipe wall around a pre-drilled hole in the pipe wall. The arrangement, which is illustrated by Figure 1, is such that the pipe fitting is suspended above the hole 9 in the pipe 2 into which it is to be inserted. This completes a first stage of the installation procedure.

The installation apparatus, together with the pipe fitting attached thereto, is then forced downwards by way of a feed screw (not shown) which passes through a bore 46 in the outer bridle 10 and bears against the intermediate bridle 32. In this manner the pipe fitting is pushed through the hole 9 until the flared end portion 14 is entirely received within the pipe and a substantial portion of the collar 16 is received within the pipe with only the top edge of the collar 16 remaining within the hole 9. The tubular member 13 and the collar 16 are dimensioned such that the top edge of the collar 16 is a close fit within the hole 9. The resulting arrangement is illustrated in Figure 2.

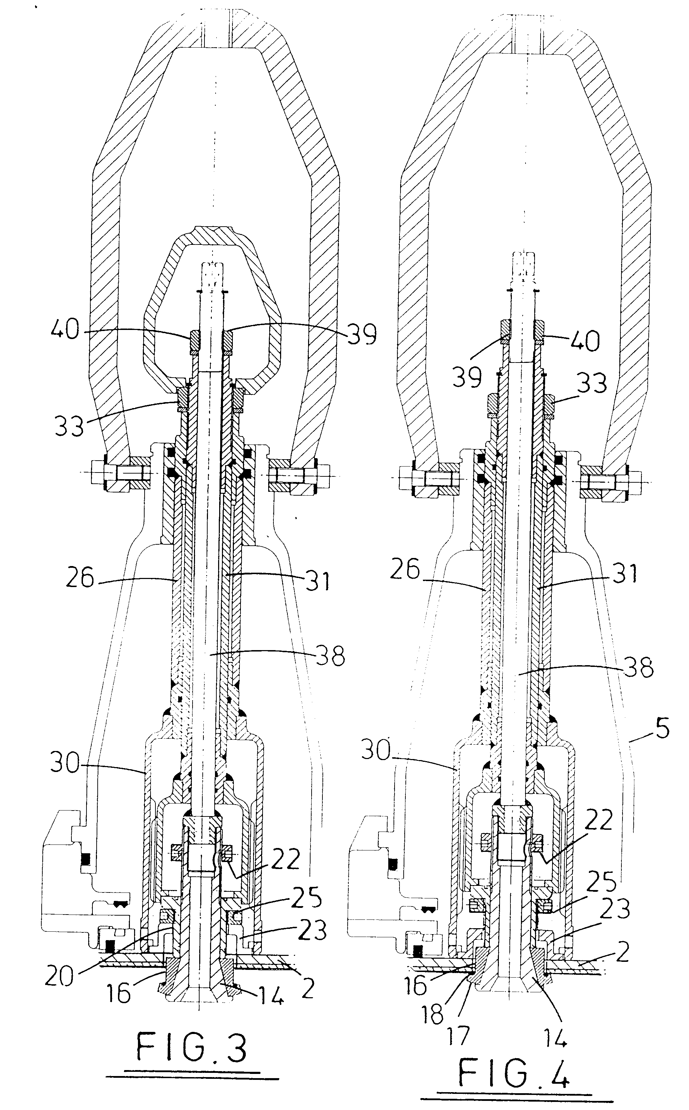

For the next stage of the installation procedure, the spindle 38 is held to prevent it from rotating and the nut 40 is rotated. As a result of the screwthread engagement between the nut 40 and the spindle 38, the spindle 38 is drawn up through the intermediate spindle 31. The tubular member is in screwthread engagement with the spindle 38 and thus is also drawn up. Since the tubular member 13 and the sleeve 20 are slidable with respect to each other, the tubular member 13 is drawn up through the sleeve 20 which by virtue of its abutment with the top edge of the collar 16 forces the collar 16 over the flared end portion 14 as it is drawn up into the body of the collar 16. Movement of the tubular member 13 up through the sleeve 20 and collar 16 is terminated when the flange 15 abuts against the lower end of the collar 16. The collar 16 is thus deformed and expanded, the resulting configuration being illustrated in Figure 3. Referring to Figure 3, the length of the flared portion 14 and the length of the collar 16 are the same so that collar 16 in this configuration now covers the entire flared end portion 14. Since the angle of taper of the collar 16 and the flared end portion 14 are the same the body of the collar 16 assumes a cylindrical shape, the diameter of which is dimensioned such as to be a close fit within the hole 9.

Referring to Figures 3 and 4, for the next stage of the installation procedure the nut 33 is rotated. This draws the intermediate spindle 31 up through the outer spindle 26 since the intermediate spindle 31 cannot rotate with respect to the outer spindle 26 because of the interengagement of the splines 36, and the outer spindle 26 cannot move axially as it is held in position with the shroud retainer 30 in abutment with the external wall of the pipe 2, under the pressure applied to the intermediate bridal 32 by the feed screw. The inner spindle 38 and the pipe fitting are drawn upwards with the intermediate spindle 31 by virtue of the engagement of the nut 40 with the screwthreaded portion 39 of the inner spindle 38. This operation draws the flared end portion 14 of the inner member 13 and the expanded collar 16 up into the hole 9 so that the flange 17 is compressed against the internal wall of the pipe between the flange 15 and the wall of the pipe. The flange 17 of the collar 16 thus forms a tight seal with the inner wall of the pipe fitting and covers any uneven or broken annular edges of the cut pipe lining. The O-ring 18 forms a supplementary seal as it is compressed between the collar flange 17 and the pipe 2 but is not essential. As shown in Fig. 4, once this stage of the installation procedure is completed the intermediate bridal 32 and feed screw are removed.

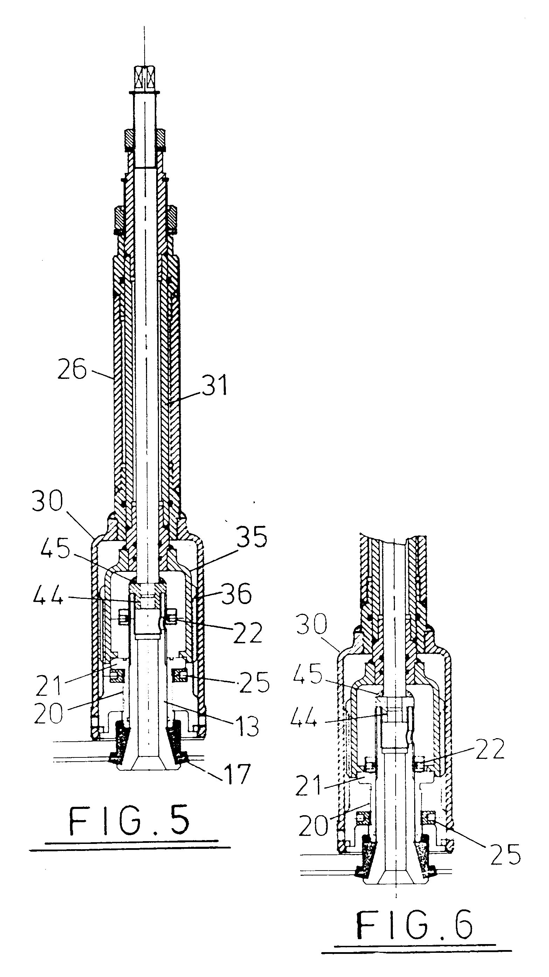

The canopy 5 is then removed as shown in Fig. 5. There is no danger of leakage from the hole in the pipe 9 at this stage as it is sealed by the collar 16 and the pipe fitting is maintained in its position relative to the pipe by the remaining installation apparatus.

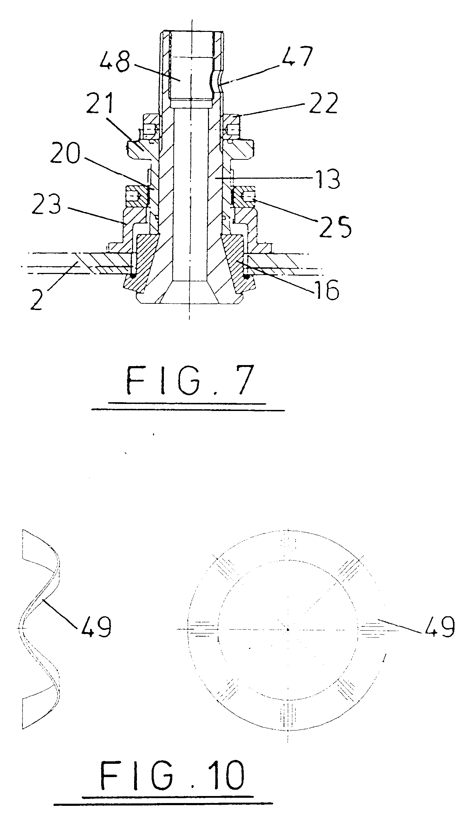

Referring to Fig. 6, the lock nut 22 is then screwed down the tubular member 13 to bear against the sleeve flange 21 and the lock nut 25 is screwed down the sleeve 20 to bear against the support member 23. (The nuts 22 and 25 are readily accessed through the above described openings in the side walls of the shroud retainer 30 and the drive member 35). This prevents the sleeve 20 moving with respect to the pipe which in turn prevents the pipe fitting moving down into the pipe and releasing the seal.

The remaining components of the installation apparatus are then removed and if required the nuts 22 and 25 are tightened further. The arrangement subsequent to the removal of all the installation apparatus is illustrated in Figure 7.

Referring to Figure 7, the tubular member 13 defines an aperture 47 in its wall near to its top end. A cylindrical 48 plug is in screw threaded engagement with the internal surface of the tubular member 13 such that it is moveable therein. In the arrangement illustrated in Figure 5, the plug 48 is positioned so as to seal both the aperture 47 and the top end of the tubular member 13.

When it is desired to use the fitting, a section of pipe or other fitting is connected to the aperture 47. The plug 48 is then screwed up the tubular member 13 to open the aperture 47 to the internal bore of the tubular member 13, and thus to the main pipe, whilst still sealing the upper end of the tubular member 13.

It will be appreciated that the maximum diameter of the flared end portion 14 of the tubular member 13, i.e. the diameter of the flange 15, must not be greater than the diameter of the hole 9 so as to enable the tubular member to be inserted through the hole 9. Thus, the flange 15 will be significantly smaller in diameter than the collar flange 17 when the collar is in its expanded state. Accordingly, the flange 15 can only offer limited support for the flange 17 as it is compressed against the inner wall of the pipe 2. If the force drawing the tubular member 13 up through the hole 9 is particularly large the flange 17 can shear off around the edge of the flange 15.

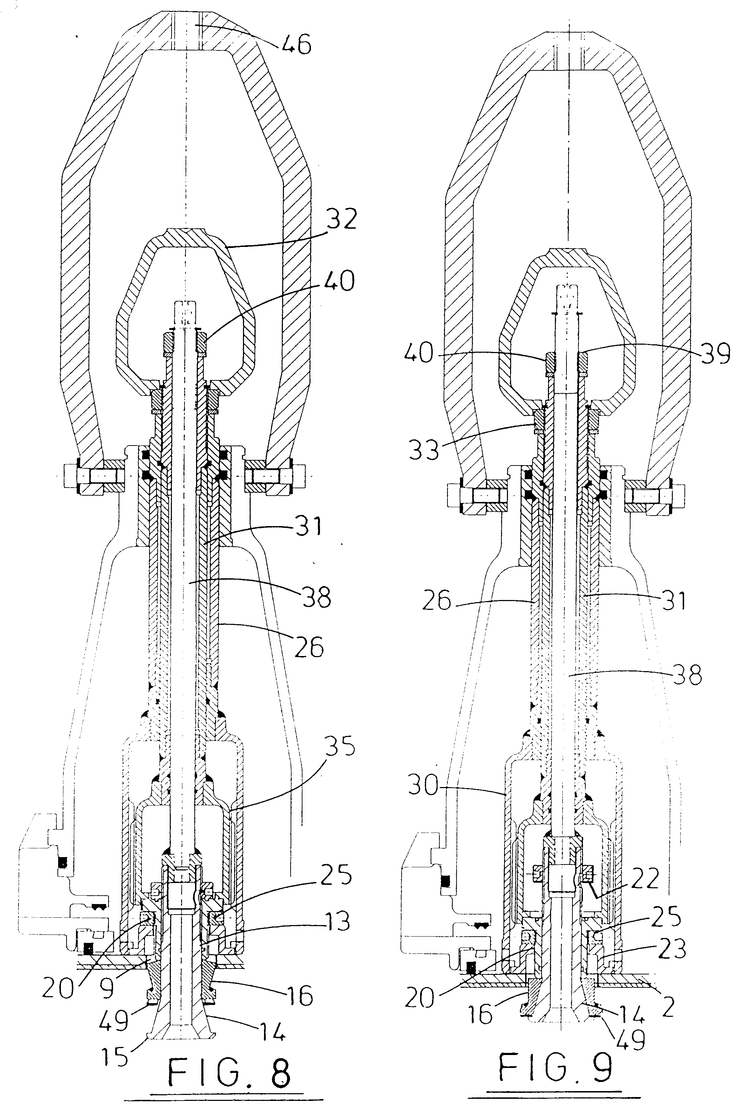

A modification to the apparatus described above which substantially solves this problem is shown in Figs. 8 and 9. The apparatus illustrated in Figs. 8 and 9 is identical to that shown in Figs. 2 and 3 but with the addition of an expandable washer 49 disposed around the tubular member 13 between the flange 17 and the flange 15.

Referring to Fig. 8, the expandable washer 49 is initially circumferentially corrugated and disposed around the tubular member 13 between the collar flange 17 and the tapered end portion 14. In this configuration, the washer 49 has an internal diameter substantially equal to the diameter of the cylindrical portion of the tubular member 13 and an external diameter substantially equal to the diameter of the hole 9 so that the washer 49 can be pushed through the hole on the tubular member 13.

Figure 10 shows the corrugated washer 49 in greater detail, in its initial unexpanded configuration.

Referring again to Figs. 6 and 7, as the tubular member 13 is drawn up through the collar so that the collar is forced onto the flared end portion 14 the washer 49 is also forced onto the flared end portion 14. The washer 49 is radially expandable by virtue of its corrugations. Thus, as the washer 49 is forced over the flared end portion 14 its inner, and therefore its outer, diameter increases and the corrugations are "flattened" out. Thus, as shown in Fig. 7, once the collar has been fully forced over the flared portion 14 the washer assumes a planar configuration with an external diameter substantially equal to the expanded diameter of the collar flange 17.

The washer 49 in its expanded form, shown in Fig. 9, offers improved support for the collar flange 17 as it is compressed against the inner wall of the pipe 2.

As an alternative, a split washer may be used in place of a corrugated washer 49. In this case the split washer will initially have overlapping ends which are forced apart as the washer is forced over the flared end portion 14 and expanded. The result is again greater support for the collar flange 17 as it is compressed against the internal wall of pipe 2. However, the split washer does not perform as well as the corrugated washer as, if the force drawing the tubular member 13 up through the pipe hole 9 is large, a split washer can be forced over the flange 15 and therefore off the end of the tubular member 13.

All other details of installation and use of the pipe fitting shown in Figs. 8 and 9 are the same as that described above in relation to the pipe fitting shown in Figs. 1 to 5.

It will be appreciated that the collar 16 need not have the detailed configuration described above and shown in the drawings. For instance, the collar could be a simple ring, equivalent to the flange 17, and therefore have no portion which is received within the aperture 9. In this case it may be necessary to provide further support for the tubular member 13 within the aperture 9.

## Claims

1. A pipe fitting for installation in an aperture defined by a wall, the pipe fitting comprising a substantially tubular body defining an outwardly flared end portion insertable through the aperture, and a deformable collar slidably disposed around the tubular member, the flared end portion and the collar being dimensioned so that the collar may be outwardly expanded by sliding it onto the flared end portion, the collar in its unexpanded state being insertable through the aperture and in its expanded state having a maximum diameter greater than the diameter of the aperture.

2. A pipe fitting according to claim 1, wherein the collar comprises a generally tubular section which supports an outwardly extending flange at an end thereof adjacent the flared end portion of the tubular member.

3. A pipe fitting according to claim 2, wherein when the collar is in its free state it defines a tapered body section which narrows towards the flanged end.

4. A pipe fitting according to claim 3, wherein the angle of taper of the flared end of the tubular body is substantially the same as the angle of taper of the body section of the collar such that when the collar is expanded on the flared end the outside surface of the body section is substantially cylindrical.

5. A pipe fitting according to any preceding claim, wherein the length of the flared portion of the tubular body and the length of the collar are substantially equal.

6. A pipe fitting according to any preceding claim, wherein the tubular body defines a radially outwardly extending annular flange adjacent the widest part of the flared end.

7. A pipe fitting according to any preceding claim, wherein the collar is formed from a plastics material.

8. A pipe fitting according to claim 7, wherein the collar is formed from polyethylene.

9. A pipe fitting according to any one of claims 2 to 8, wherein an elastomeric sealing member is disposed around the collar adjacent the flange of said collar.

10. A pipe fitting according to any preceding claim, wherein the tubular body defines an aperture in the wall thereof near to its end remote from the flared end.

11. A pipe fitting according to claim 10, wherein the end of the tubular body remote from said flared end is sealed by a plug in screw threaded engagement with an internal surface of the tubular body.

12. A pipe fitting according to claim 11, wherein said plug is moveable between a first position in which it seals the said aperture and the end of the tubular body and a second position in which the said aperture is in fluid communication with the aperture in the wall.

13. A pipe fitting according to any preceding claim, comprising means for forcing the collar onto the flared end of the tubular body.

14. A pipe fitting according to claim 13, wherein said forcing means comprises a nut in screw threaded engagement with the tubular body between the collar and the end of the tubular member remote from the flared end.

15. A pipe fitting according to claim 14, wherein said forcing means further comprises a tubular sleeve disposed around the tubular member between the collar and the nut and moveable with respect to the tubular body.

16. A pipe fitting according to claim 15, wherein said sleeve defines a flange at the end thereof nearest the nut.

17. A pipe fitting according to any preceding claim, comprising means for supporting the tubular body within the aperture defined in the wall with the collar bearing against an inner surface of the wall around the periphery of the aperture.

18. A pipe fitting according to claim 17, wherein the means for supporting the tubular body comprises a substantially cup shaped member defining an annular rim intended to abut against an outer surface of the wall around said aperture.

19. A pipe fitting according to claim 18, wherein the supporting means is in loose engagement with the tubular sleeve.

20. A pipe fitting according to claim 19, further comprising a nut in screw threaded engagement with the tubular sleeve disposed between the supporting means and the end of the sleeve remote from the collar.

21. A pipe fitting according to claim 6 or any claim dependant upon claim 6, wherein a deformable washer is slidably disposed around the tubular member between the collar and the outwardly extending annular flange of the tubular body, the deformable washer being slidable along the tubular body onto the flared end portion as the collar is slid onto the flared end portion, and the deformable washer being dimensioned such that it is outwardly expanded as it is slid onto the flared end portion to a maximum diameter greater than the maximum diameter of the annular flange of the tubular body.

22. A pipe fitting according to claim 21, wherein the washer is circumferentially corrugated when in its unexpanded state and is substantially planar when in its expanded state.

23. A pipe fitting according to claim 21, wherein the washer is split so as to define two circumferential ends, the two ends overlapping when the washer is in its unexpanded state.

24. Apparatus for installing a pipe fitting according to any preceding claim in an aperture in a container wall, comprising means for pushing said fitting through the aperture with the collar supported on the central portion of the tubular body such that the flared end of the tubular body and at least a portion of the collar are received within the interior of the container, means for forcing the collar onto the flared end of the tubular body to expand the collar, and means for partially drawing the fitting back through the aperture such that at least a portion of the collar is pressed against the inner wall of the container around the aperture.

25. Apparatus according to claim 24 for installing a pipe fitting, the pipe fitting including a collar which comprises a body section which supports an outwardly extending flange at an end thereof adjacent the flared end portion of the tubular member, wherein said means for partially drawing the fitting back through the aperture draws the fitting back through the aperture such that a portion of the body section of the collar is received within the aperture and the collar flange is pressed against the inner wall of the container.

26. Apparatus according to claim 24 or 25, comprising a housing mounted on the container around the location of the aperture.

27. Apparatus according to claim 26, wherein the said means for pushing the pipe fitting through the aperture in the container wall comprises a first elongate member supported by the housing so that its longitudinal axis extends substantially perpendicularly to the container wall concentric with the aperture, the first elongate member being moveable along its longitudinal axis.

28. Apparatus according to claim 27, wherein the first elongate member defines a screw threaded spigot extending axially from one end thereof, said spigot being adapted to be received in an internally screw threaded socket defined by the pipe fitting.

29. Apparatus according to any one of claims 25 to 28, wherein said means for forcing the collar onto the flared end of the tubular body comprises a drive member which acts upon the end of the collar remote from the flared end, and means for urging said drive member and the flared end together in a direction parallel to the axis of the tubular body and collar.

30. Apparatus according to claim 29, wherein the said drive member comprises a tubular sleeve disposed around the tubular member of the pipe fitting.

31. Apparatus according to claim 29 or 30, wherein said means for urging the drive member and the flared end axially together comprises a first hollow generally cylindrical member supported within the housing and disposed coaxially with the axis of said first elongate member and the tubular body and in abutment with the drive member, and means to prevent axial movement of the drive member whilst the tubular body is moved along its axis by means of the first elongate member.

32. Apparatus according to claim 31, wherein said means to prevent axial movement of the drive member comprises a second hollow elongate member supported within the housing and coaxially disposed around the first elongate member and in abutment with the said first cylindrical member, and means for preventing axial movement of the hollow elongate member relative to the housing.

33. Apparatus according to claim 32, wherein the first cylindrical member and the second hollow elongate member are defined by two portions of a single member.

34. Apparatus according to either of claims 32 or 33, wherein a portion of the external surface of the first elongate member is screw threaded, and a first nut is in screw threaded engagement with said portion and bears against the top edge of the second hollow elongate member, whereby rotation of said first nut causes relative axial movement between the first elongate member and the second hollow elongate member.

35. Apparatus according to any one of claims 24 to 34, wherein said means for partially drawing said fitting up through the aperture comprises a third hollow elongate member supported by the housing and disposed coaxially around the second hollow elongate member, a second hollow cylindrical member disposed around the tubular body, the drive member and the aperture, one end of said second cylindrical member bearing, directly or indirectly, against the container wall and the other end being fixed to the third hollow elongate member, and a second nut in screw threaded engagement with the second hollow elongate member and abutting the end of the third hollow elongate member remote from the second cylindrical member, whereby rotation of said second nut with respect to both hollow elongate members causes the second hollow elongate member to move axially up through the third hollow elongate member.

36. A method of installing a pipe fitting according to any one of claims 1 to 23 in a pre-drilled aperture in a container, comprising pushing the pipe fitting through the aperture so that the flared end of the tubular body and at least a portion of the collar are received within the container, forcing the collar onto the flared end of the tubular body so that the collar is expanded, and drawing the fitting back up through the aperture so that at a least a portion of the collar is pressed against the internal wall of the container.

37. A method according to claim 36, in which the pipe fitting includes a collar which comprises a body section which supports an outwardly extending flange at an end thereof adjacent the flared end portion of the tubular member, wherein the fitting is drawn back up through the aperture so that a portion of the body section of the collar is received within the aperture and the collar flange is pressed against the internal wall of the container.

38. A method as claimed in claim 36 or 37, wherein the step of forcing the collar onto the flared end of the tubular body comprises holding the collar in a fixed position relative to the container and drawing the tubular body up through the collar so that the flared end is received within the collar.

39. A method according to claim 37 or claim 38, wherein on completion of the step of pushing the fitting through the aperture, the end of the collar remote from the collar flange remains within the hole in abutment with the rim of the hole.

40. A pipe fitting substantially as hereinbefore described with reference to Figs. 1 to 7, 8 to 9, and 10 of the accompanying drawings.

41. Apparatus for installing a pipe fitting in a pre-drilled aperture in a container substantially as hereinbefore described with reference to Figs. 1 to 7, 8 to 9, and 10 of the accompanying drawings.

42. A method of installing a pipe fitting in a pre-drilled aperture in a container substantially as hereinbefore described with reference to Figs. 1 to 7, 8 to 9, and 10 of the accompanying drawings.
